(19) Europäisches Patentamt
European Patent Office
Office européen des brevets

(11) Publication number: **0 142 173**
**A2**

(12) # EUROPEAN PATENT APPLICATION

(21) Application number: 84113782.1

(22) Date of filing: 14.11.84

(51) Int. Cl.[4]: B 01 D 25/12

(30) Priority: 16.11.83 JP 213897/83

(43) Date of publication of application:
22.05.85 Bulletin 85/21

(84) Designated Contracting States:
DE FR GB

(71) Applicant: MITSUBISHI PLASTICS INDUSTRIES LIMITED
5-2, Marunouchi 2-chome
Chiyoda-ku Tokyo(JP)

(72) Inventor: Yoshiga, Norio c/o Mitsubishi Plastics
Industries Limited Nagahama Kojo, 5-8
Mitsuya-cho Nagahama-shi Shiga-ken(JP)

(74) Representative: Wächtershäuser, Günter, Dr.
Tal 29
D-8000 München 2(DE)

(54) **Diaphragm for a filter press.**

(57) A diaphragm for a filter press, which is made of a polyolefin thermoplastic elastomer composed essentially of a polyolefin resin and an ethylene-propylene copolymer rubber or an ethylene-propylene-non-conjugated diene copolymer rubber.

EP 0 142 173 A2

Croydon Printing Company Ltd.

DIAPHRAGM FOR A FILTER PRESS

The present invention relates to a diaphragm for a compression-type filter press.

In the field of filtration, efficient dehydration is desired with a view to saving of energy, and a compression-type filter press has been widely used in recent years. In the compression-type filter press, a diaphragm is provided on one side of a filtration chamber so that a cake remaining in the chamber upon filtration is further compressed by the diaphragm. The diaphragm is usually made of a natural rubber (NR), or a synthetic rubber such as styrene rubber (SBR), nitrile rubber (NBR) or an ethylene-propylene rubber (EPR) depending upon the type or temperature of the material (e.g. a slurry) to be filtered.

However, such conventional natural or synthetic rubbers had drawbacks in the heat-resistance, thermal aging resistance or chemical resistance, and an improvement in this respect has been desired. It has been proposed to use a block copolymer of polypropylene with polyethylene. However, such a block copolymer is inferior to rubbers in the elasticity, and when used repeatedly, it undergoes whitening or the residual strain tends to increase. Further, such a copolymer is poor in the impact resistance at a low temperature. Therefore, there has been a possibility of an accident such that the diaphragm breaks during the compressing operation in winter time.

Under these circumstances, the present inventors has conducted extensive researches to obtain an elastomer for the diaphragm free from the above-mentioned difficulties, and finally accomplished the present invention. Namely, the present invention provides a diaphragm for a filter press, which is made of a polyolefin thermoplastic elastomer composed esentially of a polyolefin resin and an ethylene-propylene copolymer rubber (hereinafter referred to simply as "EPM") or an ethylene-propylene-non-conjugated diene copolymer rubber (hereinafter referred to simply as "EPDM").

Now, the present invention will be described in detail with reference to the preferred embodiments.

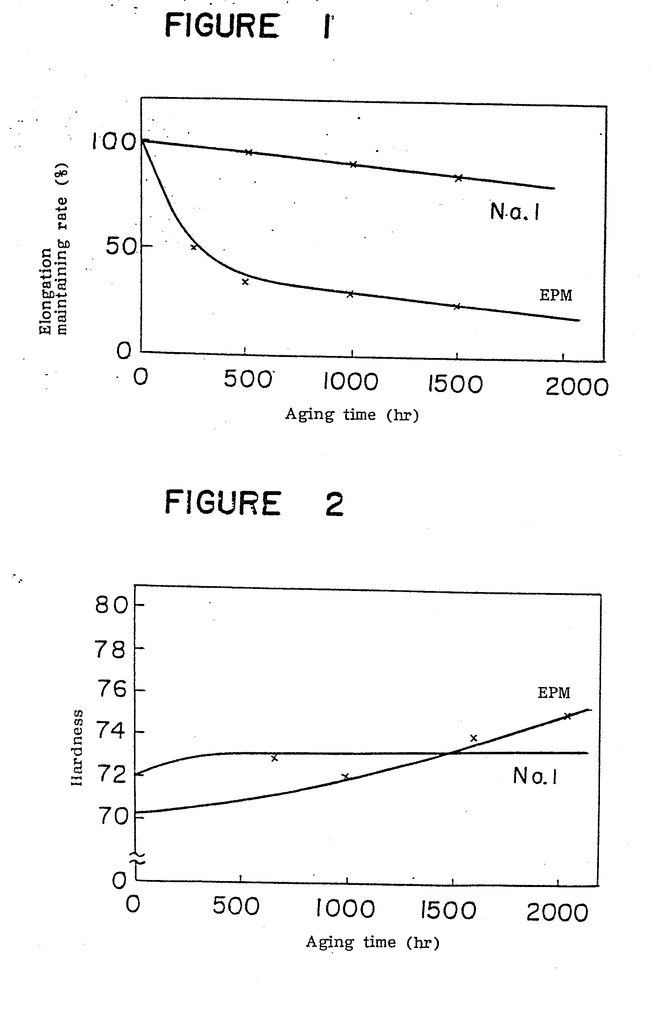

In the accompanying drawings, Figure 1 is a graph showing the changes in the elongation of a diaphragm of the present invention and of a conventional diaphragm due to thermal aging.

Figure 2 is likewise a graph showing the changes in the hardness due to thermal aging.

As the polyolefin resin used as the hard segment among the components constituting the elastomer of the present invention, there may be mentioned, for instance, isotactic polypropylene, syndiotactic polypropylene, polyethylene or a propylene-α-olefin copolymer such as a propylene-ethylene copolymer, an ethylene-1-butene copolymer, a propylene-1-hexene copolymer or a propylene-4-methyl-1-pentene copolymer.

As EPM as the soft segment, there may be mentioned an ethylene-propylene copolymer rubber composed of from 20 to 90% by weight, preferably from 40 to 85% by weight, of ethylene and from 10 to 80% by weight, preferably from 15 to 60% by weight, of propylene. Likewise, EPDM may be composed of from 80 to 99% by weight of an ethylene-propylene component and from 1 to 20% by weight of a non-conjugated diene component. The non-conjugated diene component of EPDM includes a straight chain diene such as 1,4-hexadiene, 1,4-pentadiene or 1,5-hexadiene and a cyclic polyene such as dicyclopentadiene, methylene norbornene, ethylidene norbornene, cyclooctadiene or methyltetrahydroindene. The non-conjugated diene constitutes from 1 to 20% by weight, preferably from 4 to 10% by weight of EPDM. The proportion of ethylene and propylene constituting the ethylene-propylene component are the same as the corresponding proportions in the above-mentioned EPM.

The blending ratio of the polyolefin resin to EPM or EPDM is preferably within a range of from 10:90 to 50:50. These components may be mechanically blended by means of a Bunbury's mixer, a single or twin-screw extruder, a variety of kneaders or open rolls. They may be partially cross-linked by the following steps.

1) EPM or EPDM is partially cross-linked, and then blended with an polyolefin resin.

2) Cross-linking is conducted while EPM or EPDM and the polyolefin resin are being mixed.

3) The two components are preliminarily kneaded and then subjected to cross-linking.

The degree of gelation of the partially cross-linked elastomer is preferably such that when it is immersed in cyclohexane at 23°C for 48 hours, the insoluble component is within a range of from 20 to 95% by weight.

With respect to the physical properties of the elastomer of the present invention, the flexural modulus of elasticity at 23°C is preferably from 75 to 600 $kg/cm^2$. If the flexural modulus is less than 75 $kg/cm^2$, the rigidity tends to be poor, whereby when subjected to filtration operation by supplying a high pressure fluid at a level of e.g. from 10 to 30 $kg/cm^2$, the diaphragm tends to locally expand and enter into an inlet for the fluid, and the diaphragm tends to break frequently. Accordingly, the flexural modulus is desired to be at least 75 $kg/cm^2$. On the other hand, if the flexural modulus exceeds 600 $kg/cm^2$, the elasticity tends to be poor, whereby the permanent strain increases by repeated use. Accordingly, the flexural modulus is preferably less than 600 $kg/cm^2$.

On the other hand, the hardness is preferably from 60 to 85° as measured in accordance with JIS-K6301. If the hardness is less than 60°, the elastomer tends to be so soft that the sealing between the support panel and the diaphragm tends to be poor. On the other hand, if the hardness exceeds 85°, and permanent strain of compression due to the fastening force (normally from 40 to 50$kg/cm^2$) of the filter press tends to increase. Accordingly, the hardness should preferably be at most 85°.

Further, the permanent elongation is preferably at most 20%, as measured in accordance with JIS-K6301. If the permanent elongation exceeds 20%, the permanent strain increases by repeated use, thus leading to a trouble for the filtration operation.

The above-mentioned elastomer of the present invention may be formed into a diaphragm of a desired shape by a conventional injection molding method or compression molding method. The diaphragm of the present invention made of the above-mentioned material, has far superior heat resistance, thermal aging resistance and chemical resistance to the conventional diaphragms made of rubber. Further, the diaphragm of the present invention is durable for a long period of time, and thus is extremely advantageous as a diaphragm for a compression-type filter press.

Now, the present invention will be described with reference to Examples. However, it should be understood that the present invention is by no means restricted by these specific Examples.

EXAMPLE 1:

A sheet made of a blend comprising 19% by weight of PP (polypropylene) and 81% by weight of EPDM and having a thickness of 6 mm, was designated as Sample No. 1. A similar sheet made of a blend comprising 25% by weight of PP and 75% by weight of EPDM, was designated as Sample No. 2. For the purpose of comparison, a similar sheet made of EPM was designated as Comparative Example 1. Likewise, a similar sheet made of SBR was designated as Comparative Example 2. These samples were subjected to chemical resistance tests. The results are shown in Tables 1 and 2. Further, the hardness and the flexural modulus of each sample are as follows.

| | Hardness (JIS-K6301) (Type A) | Flexural modulus (JIS-K7203) ($kg/cm^2$) |
|---|---|---|
| Comparative Example 1 | 70 | 250 |
| Comparative Example 2 | 70 | 250 |
| Sample No. 1 | 72 | 180 |
| Sample No. 2 | 83 | 260 |

The chemical resistance tests were conducted under the following conditions.

Reagents: $H_2O$, 30% $H_2SO_4$, 35% HCl, 40% $HNO_3$, 40% NaOH, 5% NaClO

Immersing condition: 80°C x 100 hr Test piece: 25 mm x 50 mm x 6 mm for the weight change and Dimensional change JIS-K6301 (Dambell No. 2) for the degradation of the physical property

Table 1 (Chemical resistance tests: Weight and Dimensional changes)

| | | $H_2O$ | $H_2SO_4$ | HCl | $HNO_3$ | NaOH | NaClO |
|---|---|---|---|---|---|---|---|
| Comparative Example 1 | Weight change | 0.6 | 0.8 | 20.4 | Dissolved | -0.6 | 2.1 |
| | Dimensional change | Nil | Nil | Swelled | | Nil | Nil |
| Comparative Example 2 | Weight change | 1.1 | 1.1 | 9.5 | Dissolved | Nil | Nil |
| | Dimensional change | Nil | Nil | Nil | | Nil | Nil |
| Sample No. 1 | Weight change | 0.3 | 0.1 | 2.3 | -9.4 | -0.1 | 0.3 |
| | Dimensional change | Nil | Nil | Nil | Nil | Nil | Nil |
| Sample No. 2 | Weight change | 0.3 | 0.1 | 0.7 | -7.5 | -0.1 | 0.3 |
| | Dimensional change | Nil | Nil | Nil | Nil | Nil | Nil |

(Unit: % by weight)

Table 2 (Changes in the physical properties)

| | | $H_2O$ | $H_2SO_4$ | HCl | $HNO_3$ | NaOH | NaClO |
|---|---|---|---|---|---|---|---|
| Comparative Example 1 | Tensile strength | ◎ | ◎ | ○ | Dissolved | ◎ | △ |
| | Breaking elongation | ○ | ◎ | ○ | | ◎ | × |
| Comparative Example 2 | Tensile strength | ○ | ○ | △ | Dissolved | ○ | × |
| | Breaking elongation | ○ | ○ | △ | | ○ | × |
| Sample No. 1 | Tensile strength | ○ | ◎ | ◎ | ○ | ◎ | ◎ |
| | Breaking elongation | ○ | ○ | ◎ | ○ | ◎ | ◎ |
| Sample No. 2 | Tensile strength | ◎ | ◎ | ◎ | ○ | ◎ | ◎ |
| | Breaking elongation | ○ | ◎ | ◎ | ○ | ◎ | ◎ |

Note: Physical property maintaining rate R:

◎ : $0.9 \leq R \leq 1.0$, ○ : $0.7 \leq R < 0.9$, △ : $0.5 \leq R < 0.7$, × : $0.5 < R$

The physical property maintaining rates R in Table 2 are relative values based on the corresponding physical properties of the respective non-treated Samples being set at 1.0.

It is evident from Tables 1 and 2 that Samples Nos. 1 and 2 i.e. polyolefin thermoplastic elastomers of the present invention, are superior to the conventional rubber products (Comparative Examples 1 and 2) in the chemical resistance, particularly acid resistance.

EXAMPLE 2:

The polyolefin thermoplastic elastomer of Sample No. 1 and EPM of Comparative Example 1 were respectively formed into diaphragms. The diaphragms were kept in a hot air dryer at a temperature of 80°C, whereby the changes in the elongation and hardness were investigated. The results are shown in Figures 1 and 2.

From the results, it is evident that the diaphragm of the present inventin is very stable with little change in the hardness and elongation against heat and highly durable for the filtration operation at a high temperature for a long period of time. Further, it is evident that the diaphragm of the present invention is far superior to the conventional rubber product in the heat resistance and aging resistance.

CLAIMS:

1. A diaphragm for a filter press, which is made of a polyolefin thermoplastic elastomer composed essentially of a polyolefin resin and an ethylene-propylene copolymer rubber or an ethylene-propylene-non-conjugated diene copolymer rubber.

2. The diaphragm according to Claim 1, wherein, said rubber is partially cross-linked.

3. The diaphragm according to Claim 1, wherein the polyolefin resin is isotactic polypropylene, syndiotactic polypropylene, polyethylene or a propylene-α-olefin copolymer.

4. The diaphragm according to Claim 1, wherein the ethylene-propylene copolymer rubber is composed of from 20 to 90% by weight of ethylene and from 10 to 80% by weight of propylene.

5. The diaphragm according to Claim 1, wherein the ethylene-propylene-non-conjugated diene copolymer rubber is composed of from 80 to 99% by weight of an ethylene-propylene component and from 1 to 20% by weight of a non-conjugated diene component selected from the group consisting of 1,4-hexadiene, 1,4-pentadiene, 1,5-hexadiene, dicyclopentadiene, methylene norbornene, ethylidene norbornene, cyclooctadiene and methyltetrahydroindene.

6. The diaphragm according to Claim 5, wherein the ethylene-propylene component is composed of from 20 to 90% by weight of ethylene and from 10 to 80% by weight of propylene.

7. The diaphragm according to Claim 1, wherein the ratio of the polyolefin resin to the ethylene-propylene copolymer rubber or ethylene-propylene-non-conjugated diene copolymer rubber is within a range of from 10:90 to 50:50.

# FIGURE 1

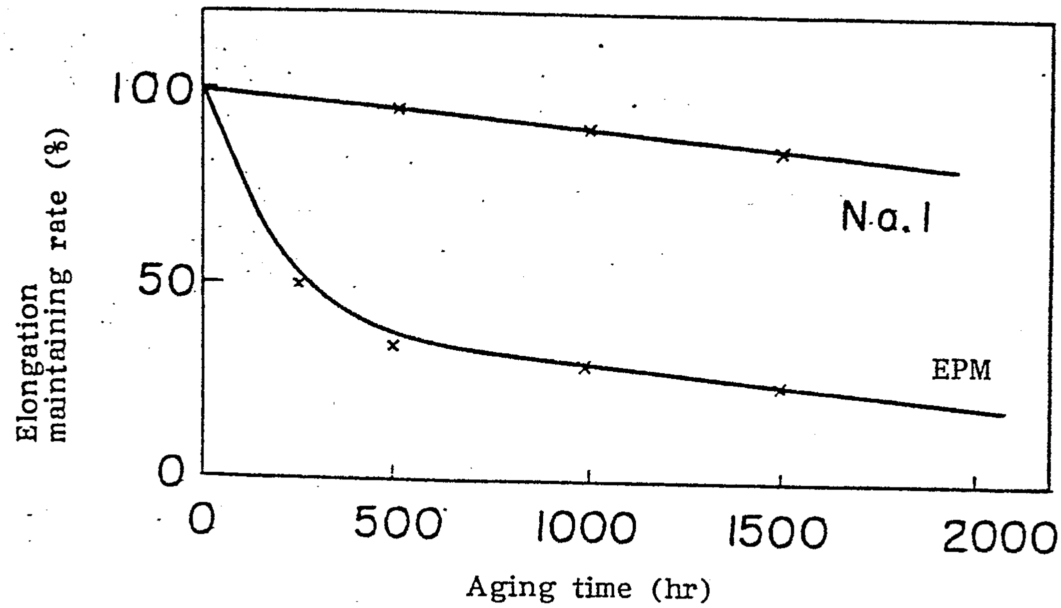


# FIGURE 2